# EUROPEAN PATENT SPECIFICATION

(11) **EP 3 321 157 B1**
(45) Date of publication and mention of the grant of the patent: **12.12.2018**
(21) Application number: 17200571.2
(22) Date of filing: 08.11.2017
(51) Int. Cl.: B62K 19/46, B62J 1/12, B62J 6/00, B62K 11/04, B60Q 3/225, B60Q 3/30

(54) **STRADDLED VEHICLE**
GRÄTSCHSITZFAHRZEUG
VÉHICULE À ENFOURCHER

(30) Priority: 09.11.2016 JP 2016219064
(43) Date of publication of application: 16.05.2018
(73) Proprietor: Yamaha Hatsudoki Kabushiki Kaisha, Iwata-shi Shizuoka 438-8501 (JP)
(72) Inventor: KAKUTA, Wataru, Iwata-shi, Shizuoka 438-8501 (JP)
(74) Representative: Grünecker Patent- und Rechtsanwälte PartG mbB

(56) References cited:
- EP-A1- 1 939 078
- EP-A1- 2 431 264
- EP-A1- 2 527 200

## Description

The present invention relates to a straddled vehicle. A straddled vehicle according to the preamble of claim 1 is disclosed by EP 2 431 264 A1.

JP 2966543 B2 discloses a motorcycle as an example of a straddled vehicle. The motorcycle includes a storage box configured to be opened and closed with a seat. The seat is rotatable up and down with respect to the storage box. When the seat is closed, the clearance gap between the seat and the storage box is tightly sealed with a sealing member attached to the seat.

The seat includes an arm bracket provided in a front end portion of the seat. The arm bracket is integrated with the bottom plate of the seat. The arm bracket is linked to a hinge bracket via a support shaft. The hinge bracket is integrated with the storage box. The hinge bracket is provided in a front end portion of the storage box. The arm bracket is rotatable up and down about the support shaft with respect to the hinge bracket.

Straddled vehicles such as motorcycles may be required to include a high-capacity storage box. However, in JP 2966543 B2, as shown in FIG. 2 of JP 2966543 B2, the front end portion of the sealing member, which is configured to tightly seal the clearance gap between the seat and the storage box, has to be arranged at a position further to the rear than the arm bracket of the seat. Thus, the opening of the storage box cannot be extended forward to the arm bracket of the seat. It is therefore difficult in JP 2966543 B2 for the storage box to have an increased capacity.

It is hence an object of the present invention to provide a straddled vehicle in which a capacity of a storage box is increased while maintaining the sealing property of the storage box. The present object is achieved by a straddled vehicle according to Claim 1. Preferred embodiments are laid down in the dependent claims.

A preferred embodiment of the present invention provides a straddled vehicle including a frame, a storage box including an annular opening end that defines an opening opened upward, a seat arranged over the opening of the storage box, a hinge including a movable bracket that is a separate member from the seat, attached to the seat, rotatable together with the seat with respect to the frame between a closed position where the opening of the storage box is closed with the seat and an open position where the opening of the storage box is opened, and configured to overlap the opening of the storage box in a plan view of the straddled vehicle when the seat is arranged in the closed position, an annular first sealing member that is made of rubber or resin, and configured to be sandwiched between the seat and the storage box to seal a clearance gap between the seat and the storage box when the seat is arranged in the closed position, and a second sealing member that is made of rubber or resin, and sandwiched between the seat and the movable bracket to seal a clearance gap between the seat and the movable bracket.

In accordance with the arrangement above, the seat is attached to the frame via the hinge including the movable bracket that is attached to the seat. The seat is rotatable together with the movable bracket with respect to the frame between the closed position and the open position. When the seat is arranged in the closed position, the clearance gap between the storage box and the seat is tightly sealed with the first sealing member, and the movable bracket overlaps the opening of the storage box in the plan view of the straddled vehicle. In other words, the storage box is extended forward to achieve this. It is thus possible for the storage box to have an increased capacity.

Further, since the movable bracket is a member separated from the seat bottom, the shape of the seat bottom can be simplified compared to the case where the movable bracket is integrated with the seat bottom. In addition, the movable bracket can be made of a material different from that of the seat bottom, and thus the stiffness of the movable bracket can be increased. The clearance gap between the seat and the movable bracket is tightly sealed with the second sealing member. It is thus possible for the storage box to have an increased capacity with its tight closure being maintained.

In the present preferred embodiment, at least one of the following features may be added to the above straddled vehicle.

The first sealing member is attached to the storage box, and the movable bracket includes an auxiliary sealing surface to be pressed against the first sealing member when the seat is arranged in the closed position.

In accordance with the arrangement above, when the seat is arranged in the closed position, the auxiliary sealing surface of the movable bracket is pressed against the first sealing member attached to the storage box, so that the clearance gap between the movable bracket and the storage box is tightly sealed. That is, the movable bracket serves not only as a hinge but also to tightly seal the storage box. Accordingly, not only the clearance gap between the seat and the storage box but also the clearance gap between the movable bracket and the storage box is tightly sealed. It is thus possible for the storage box to have an increased capacity with its tight closure being maintained.

The seat includes a bottom sealing surface to be pressed against the first sealing member when the seat is arranged in the closed position, and the bottom sealing surface has an annular shape including a pair of terminal portions separated from each other in a circumferential direction of the bottom sealing surface, and the auxiliary sealing surface is arranged between the pair of terminal portions of the bottom sealing surface.

In accordance with the arrangement above, when the seat is arranged in the closed position, the bottom sealing surface of the seat is pressed against the first sealing member attached to the storage box. While the first sealing member has an annular shape surrounding the opening of the storage box, the bottom sealing surface of the seat has a C shape including a pair of mutually separated terminal portions. There is thus a non-contact region in which the bottom sealing surface of the seat is not in contact with the first sealing member. The auxiliary sealing surface of the movable bracket is arranged between the pair of terminal portions of the bottom sealing surface to come into contact with the first sealing member in the non-contact region. It is thus possible to maintain the tight closure of the storage box.

The second sealing member includes a terminal sealing portion having a terminal sealing surface arranged between the terminal portions of the bottom sealing surface and the auxiliary sealing surface and configured to be pressed against the first sealing member when the seat is arranged in the closed position.

In accordance with the arrangement above, the terminal portions of the bottom sealing surface of the seat is separated from the auxiliary sealing surface of the movable bracket in the circumferential direction of the bottom sealing surface. The terminal sealing surface provided in the terminal sealing portion of the second sealing member is arranged between the bottom sealing surface of the seat and the auxiliary sealing surface of the movable bracket. When the seat is arranged in the closed position, the bottom sealing surface of the seat, the auxiliary sealing surface of the movable bracket, and the terminal sealing surface of the second sealing member are pressed against the first sealing member. This allows the storage box to have further increased tight closure.

The terminal sealing portion of the second sealing member is arranged below the seat and the movable bracket and overlaps the seat and the movable bracket.

In accordance with the arrangement above, the terminal sealing portion of the second sealing member overlaps both the seat and the movable bracket. The entrance to the clearance gap between the seat and the movable bracket is blocked by the terminal sealing portion of the second sealing member. Even if liquid such as rainwater enters the clearance gap between the seat and the movable bracket from outside of the storage box, the liquid is blocked by the terminal sealing portion of the second sealing member. This reduces an amount of liquid to enter the storage box.

The movable bracket includes a housing recessed portion recessed from the auxiliary sealing surface, into which the terminal sealing portion of the second sealing member is inserted.

In accordance with the arrangement above, the terminal sealing portion of the second sealing member is inserted into the housing recessed portion of the movable bracket. The relative movement between the second sealing member and the movable bracket is restricted by the terminal sealing portion and the housing recessed portion. Further, since the housing recessed portion of the movable bracket is recessed from the auxiliary sealing surface of the movable bracket, the height of the step between the auxiliary sealing surface of the movable bracket and the terminal sealing surface of the second sealing member can be reduced to zero or an extremely small value. This allows the interior of the storage box to be tightly sealed more reliably.

The straddled vehicle further includes a positioning recessed portion provided in one of the movable bracket and the second sealing member and a positioning projecting portion provided in the other of the movable bracket and the second sealing member and inserted into the positioning recessed portion.

In accordance with the arrangement above, the relative movement between the second sealing member and the movable bracket is restricted by the positioning projecting portion and the positioning recessed portion. There is thus no need to hold the second sealing member by hand when the seat is attached to the movable bracket to which the second sealing member is attached.

The positioning recessed portion may be provided in the movable bracket or in the second sealing member.

If the positioning recessed portion is provided in the movable bracket, the positioning projecting portion is provided on the second sealing member. In this case, the movable bracket can be reduced in size, compared to the case where the positioning projecting portion is provided on the movable bracket. The movable bracket commonly has a higher density than the second sealing member. Accordingly, reducing the size of the movable bracket can result in a reduction in weight of the straddled vehicle.

The straddled vehicle further includes a gas spring that is arranged outside the storage box and generates a force to move the seat to the open position and a stay to which the gas spring is attached, the stay fixed to the frame, in which the movable bracket includes a seat attaching portion at which the seat is attached and a movable support portion integrated with the seat attaching portion, to which the gas spring is attached, and the movable support portion configured to move with respect to the stay with the expansion and contraction of the gas spring.

In accordance with the arrangement above, the movable support portion is provided in the movable bracket so as to be movable with respect to the stay with the expansion and contraction of the gas spring. The movable support portion of the movable bracket is integrated with the seat attaching portion of the movable bracket. If the movable support portion and the seat attaching portion are separate members, there would be a need for a member and an operation for linkage between these members. It is thus possible to reduce the number of parts of the straddled vehicle and to simplify the manufacturing of the straddled vehicle.

The hinge further includes a fixed bracket separated from the storage box and configured to rotatably support the movable bracket.

In accordance with the arrangement above, the fixed bracket configured to rotatably support the movable bracket is provided in the hinge. The fixed bracket is a member separated from the storage box. It is thus possible to simplify the shape of the storage box.

The straddled vehicle further includes an engine that generates power to cause the straddled vehicle to travel and a fuel tank that stores fuel to be supplied to the engine. The fuel tank includes an oil filler opening through which fuel to be stored in the fuel tank passes, and an oil filler cap that close the oil filler opening. When the seat is arranged in the closed position, the oil filler opening of the fuel tank may be arranged at a position further to the front than the front end of the seat. Without limiting thereto, when the seat is arranged in the closed position, the oil filler opening of the fuel tank may be arranged below the seat or further to the rear than the seat.

The straddled vehicle further includes an electrical device, a battery that stores power to be supplied to the electrical device, and a main switch that switches according to an operation by an operator among a plurality of states including an ON state in which power is supplied from the battery to the electrical device and an OFF state in which supply of power from the battery to the electrical device is stopped. The electrical device includes an LED lamp that continuously illuminates an interior of the storage box during a period of time from the time when the main switch is turned into the ON state to the time when the main switch is turned into the OFF state.

In accordance with the arrangement above, when the main switch turns into the ON state, the LED lamp is turned on to illuminate the interior of the storage box. The LED lamp continues to be on regardless of the position of the seat until the main switch turns into the OFF state. There is thus no need to provide a switch to turn the LED lamp on and off depending on the position of the seat. It is thus possible to reduce the number of parts of the straddled vehicle and to reduce the weight of the straddled vehicle. In addition, although the LED lamp continues to be on even in the state where the seat is closed, there is no need to frequently replace the light source of the LED lamp because an LED has a longer life than that of a light bulb.

The above and other elements, features, steps, characteristics, and advantages of the present invention will become more apparent from the following detailed description of the preferred embodiments with reference to the attached drawings.

### BRIEF DESCRIPTION OF THE DRAWINGS

FIG. 1 is a left side view of a scooter according to a preferred embodiment.
FIG. 2 is a left side view of a frame included in the scooter.
FIG. 3 is a left side view of the rear portion of the scooter showing states in which a seat is opened and closed.
FIG. 4 is a cross-sectional view showing a vertical cross section of the seat and a storage box taken along a vertical plane orthogonal to the front-rear direction.
FIG. 5 is a partially enlarged view of FIG. 4 including a box seal that seals the clearance gap between the seat and the storage box.
FIG. 6 is a partially enlarged view of FIG. 4 including an LED lamp that illuminates the interior of the storage box.
FIG. 7 is a schematic view showing an example of a circuit to connect the LED lamp and a battery with each other.
FIG. 8 is a left side view of the frame, the seat, the storage box, and a hinge, showing a state where the seat and a movable bracket are arranged in a closed state.
FIG. 9 is a left side view of the frame, the hinge, and a gas spring, showing a state where the movable bracket is arranged in an open state.
FIG. 10 is a front view of the frame, the hinge, and the gas spring, showing a state where the movable bracket is arranged in an open state.
FIG. 11 is a rear view of the frame, the hinge, and the gas spring, showing a state where the movable bracket is arranged in an open state.
FIG. 12 is a cross-sectional view showing a cross section of the seat bottom, the movable bracket, and a bracket seal, taken along line XII-XII in FIG. 8.
FIG. 13 is a schematic perspective view of the bracket seal.
FIG. 14A is a front view of the bracket seal.
FIG. 14B is a side view of the bracket seal.
FIG. 14C is a bottom view of the bracket seal.
FIG. 15 is a cross-sectional view showing a state where the seat bottom, the movable bracket, and the bracket seal are pressed against the box seal.

### DETAILED DESCRIPTION OF PREFERRED EMBODIMENTS

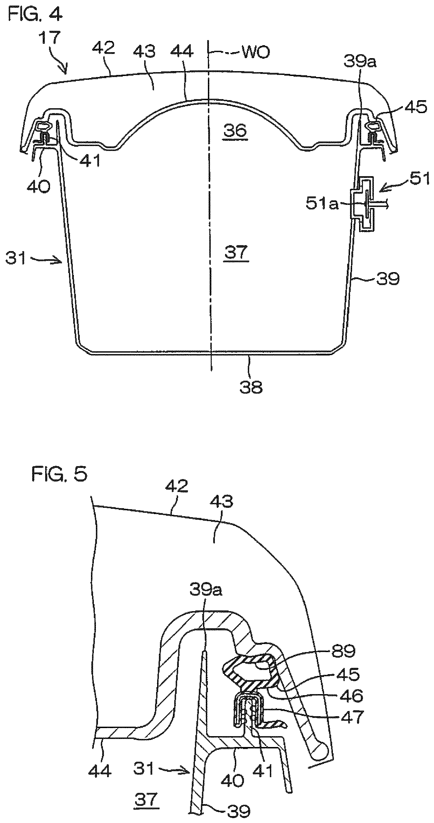

Front-rear, up-down, and right-left directions are defined on the basis of a viewpoint of a forward-facing rider who sits on a scooter 1 in a reference posture in which the scooter 1 travels straight ahead on a horizontal plane (in which a steering handle 11 is disposed at a straight-traveling position). The right-left direction corresponds to a vehicle width direction (a width direction of the scooter 1). A vehicle center WO (refer to FIG. 4) corresponds to a vertical plane that passes through a center line of a head pipe 3 and that is perpendicular to a rotational center of a rear wheel Wr. The scooter 1 in the reference posture will be hereinafter described unless specific notice is given. A front view, a side view, and a plan view mean a front view, a side view, and a plan view of the scooter 1, respectively unless specific notice is given.

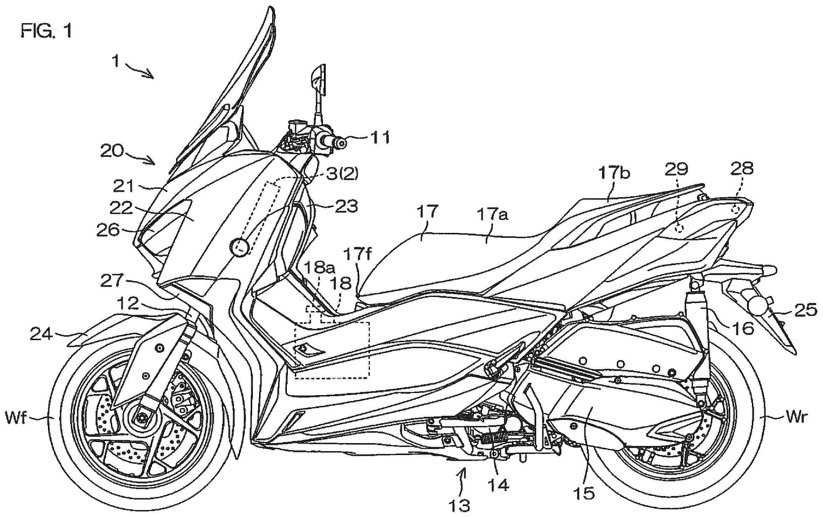

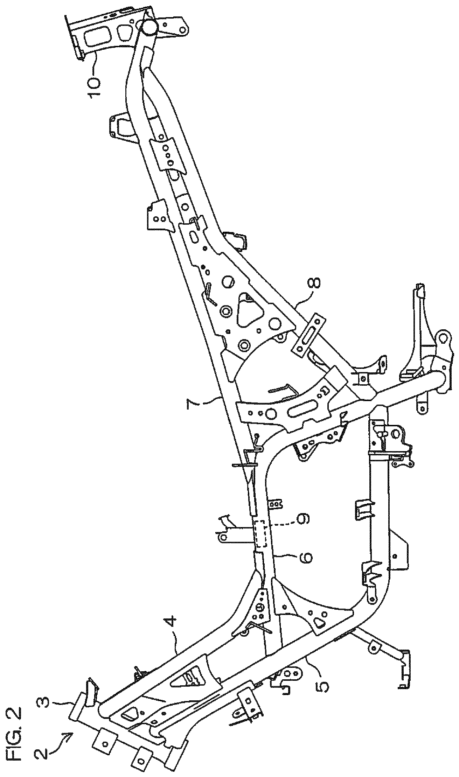

FIG. 1 is a left side view of the scooter 1 according to a preferred embodiment. FIG. 2 is a left side view of a frame 2 included in the scooter 1.

As shown in FIG. 1, the scooter 1, which is an example of a straddled vehicle, includes the frame 2 covered with an exterior cover. The frame 2 includes a head pipe 3 that extends obliquely rearward and upward. As shown in FIG. 2, the frame 2 further includes a right-and-left pair of upper down frames 4 that extend obliquely rearward and downward from the head pipe 3, a right-and-left pair of lower down frames 5 that extend obliquely rearward and downward from the head pipe 3, and a right-and-left pair of lower frames 6 that extend rearward from the lower down frames 5.

The upper down frame 4 is disposed at a higher position than the lower down frame 5, and overlaps with the lower down frame 5 in a plan view. A rear end portion of the upper down frame 4 is disposed at an upper position and at a more forward position than a rear end portion of the lower down frame 5. The rear end portion of the upper down frame 4 and the rear end portion of the lower down frame 5 are each disposed at a more rearward position than a front end portion of the lower frame 6. The rear end portion of the upper down frame 4 and the rear end portion of the lower down frame 5 are connected to the lower frame 6.

The frame 2 includes a right-and-left pair of upper rear frames 7 that extend obliquely rearward and upward from the pair of lower frames 6 and a right-and-left pair of lower rear frames 8 that extend obliquely rearward and upward from the pair of lower frames 6. The frame 2 further includes a front cross member 9 that extends from one lower frame 6 to the other lower frame 6 and a rear cross member 10 that extends from one upper rear frame 7 to the other upper rear frame 7.

The upper rear frame 7 is disposed at a higher position than the lower rear frame 8, and overlaps with the lower rear frame 8 in a plan view. The upper rear frame 7 corresponds to a seat frame. The front end portion of the upper rear frame 7 is disposed at a higher position and at a more forward position than the front end portion of the lower rear frame 8. The rear end portion of the upper rear frame 7 is disposed at a more rearward position than the rear end portion of the lower rear frame 8. The rear end portion of the lower rear frame 8 is connected to the upper rear frame 7.

As shown FIG. 1, the scooter 1 includes a steering handle 11 to be steered by a rider, and a front fork 12 rotatably supporting the front wheel Wf. The steering handle 11 is coupled to the front fork 12, which is an example of a front wheel supporting member. The steering handle 11 and the front fork 12 are pivotable with respect to the frame 2 around a steering axis corresponding to a central line of the head pipe 3. When the steering handle 11 is steered, the front wheel Wf is pivoted rightward and leftward together with the steering handle 11. The scooter 1 is thereby steered.

The scooter 1 includes a swing unit 13 swingable upward and downward with respect to the frame 2. The swing unit 13 includes an engine 14, which generates a motive power that makes the scooter 1 travel, and a driving mechanism 15, transmitting the motive power of the engine 14 to the rear wheel Wr. The swing unit 13 is mounted on the frame 2 via a pivot shaft extending in the vehicle width direction. The rear wheel Wr is rotatably supported by a rear end portion of the swing unit 13. The rear wheel Wr and the swing unit 13 are swingable upward and downward around the pivot shaft with respect to the frame 2. An upper end portion of a rear cushion 16 is mounted on the frame 2 and a lower end portion of the rear cushion 16 is mounted on the rear end portion of the swing unit 13.

The scooter 1 includes a saddle type seat 17 on which a rider sits. FIG. 1 shows an example in which a main seat 17a on which the rider sits and a tandem seat 17b on which a pillion passenger sits are provided at the seat 17. The seat 17 may be a seat for a single person. The seat 17 is disposed at a more rearward position than the head pipe 3 of the frame 2. The seat 17 is disposed above the upper rear frame 7 in a side view. The seat 17 is supported by the frame 2. An oil filler opening 18a of a fuel tank 18 is disposed at a more forward position than a front end 17f of the seat 17.

The exterior cover includes a front cover 20 that houses an upper portion of the front fork 12. The front cover 20 includes a front center cover 21 disposed in front of the head pipe 3, a right-and-left pair of front side covers 22 that are disposed on the right side and on the left side of the front center cover 21, respectively, and an inner panel 23 disposed behind the head pipe 3. The inner panel 23 corresponds to a leg shield to be disposed in front of the legs of the rider sitting on the seat 17. A front fender 24 is disposed above the front wheel Wf. A mudguard 25 corresponding to a rear fender is disposed above and behind the rear wheel Wr.

The scooter 1 includes a headlamp 26 that emits light forward and two front flashers 27 that flash in accordance with an operation of the rider. The scooter 1 further includes a tail lamp 28 that emits light rearward and two rear flashers 29 that flash in accordance with an operation of the rider. The headlamp 26 and the front flashers 27 are disposed further to the front than the seat 16. The tail lamp 28 and the rear flashers 29 are disposed further to the rear than a front end of the rear wheel Wr.

Next, a storage box 31 that is opened and closed by the seat 17 will be described in detail.

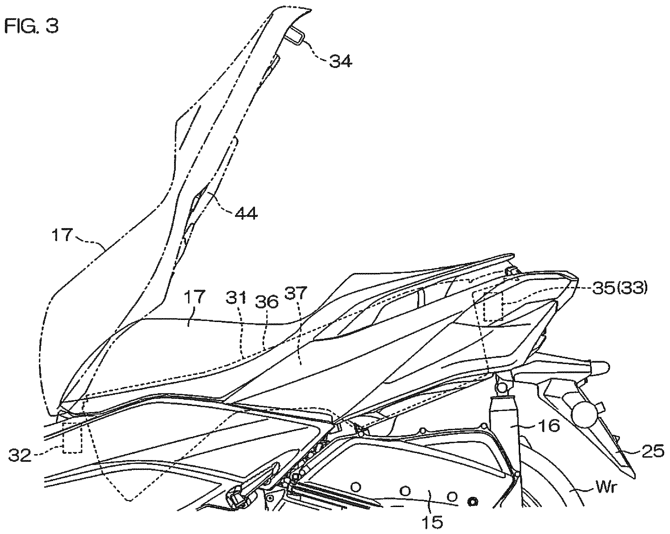

FIG. 3 is a left side view of the rear portion of the scooter 1 showing states in which the seat 17 is opened and closed. FIG. 4 is a cross-sectional view showing a vertical cross section of the seat 17 and the storage box 31 taken along a vertical plane orthogonal to the front-rear direction. A state in which the seat 17 is disposed at a closed position will be hereinafter described, unless specific notice is given.

As shown in FIG. 3, the scooter 1 includes the storage box 31 that is opened and closed by the seat 17. A front end portion of the seat 17 is attached to the frame 2 via a hinge 32. The seat 17 is turnable upward and downward with respect to the storage box 31 between the closed position (position shown by the solid line in FIG. 3) at which an opening 36 of the storage box 31 is closed by the seat 17 and an open position (position shown by the alternate long and two short dashed line in FIG. 3) at which the opening 36 of the storage box 31 is opened. When the seat 17 is lowered to the closed position, a rear end portion of the seat 17 is locked in the frame 2 by a seat lock device 33. The locking of the seat 17 by the seat lock device 33 is released by an unlock device in accordance with the operation of an operator.

The seat lock device 33 includes a pusher 34 that moves up and down together with the seat 17 and a lock unit 35 that holds the pusher 34 to restrict the movement of the seat 17. The pusher 34 protrudes downward from a rear end portion of the seat 17. FIG. 3 shows an example in which the pusher 34 is a U-shaped metal member. The lock unit 35 is attached to the frame 2. The pusher 34 is to be lowered together with the rear end portion of the seat 17 and pressed downward against the lock unit 35. This causes the pusher 34 to be held on the lock unit 35 and thereby the seat 17 to be locked at the closed position. When the operator operates the unlock device, the pusher 34 held on the lock unit 35 is released and thereby the seat 17 is unlocked.

The storage box 31 is arranged below the seat 17 in the closed position. The storage box 31 is supported on the frame 2. The storage box 31 may be attached directly to the frame 2 or may be attached to the frame 2 via another member. The storage box 31 is arranged between the hinge 32 and the lock unit 35 in the front-rear direction. The front end of the storage box 31 is arranged at a position further to the front than the cylinder head of the engine 14. The rear end of the storage box 31 is arranged at a position further to the rear than the front end of the rear wheel Wr.

As shown in FIG. 4, the storage box 31 includes a bottom wall portion 38 arranged below a storage space 37 in which articles are to be placed and a cylindrical outer wall portion 39 surrounding the storage space 37. The outer wall portion 39 extends upward from the edge of the bottom wall portion 38. The bottom wall portion 38 and the outer wall portion 39 define the storage space 37. The upper end 39a of the outer wall portion 39 defines an opening 36 opened upward. The annular upper end 39a of the outer wall portion 39 corresponds to an opening end of the storage box 31. The opening 36 of the storage box 31 is arranged over the storage space 37. The storage space 37 is accessible from over the storage box 31 via the opening 36 of the storage box 31.

The seat 17 includes a seat bottom 44 arranged over the storage box 31, a spongy cushion 43 arranged on the seat bottom 44, and a seat cover 42 covering the surface of the cushion 43. The seat bottom 44 is made of a material, such as resin, having stiffness higher than that of the cushion 43 or the seat cover 42. The seat cover 42 is made of a stretchable material such as vinyl. The seat cover 42 runs around from on the cushion 43 to under the seat bottom 44. The edge of the seat cover 42 is arranged below the seat bottom 44. The edge of the seat cover 42 is fixed to the seat bottom 44 using a plurality of staples.

FIG. 5 is a partially enlarged view of FIG. 4, showing a vertical cross-section of a box seal 45 that seals the clearance gap between the seat 17 and the storage box 31.

As shown in FIGS. 4 and 5, the scooter 1 includes the box seal 45 for tight closure of the clearance gap between the seat 17 and the storage box 31 when the seat 17 is arranged in the closed position. When the seat 17 is lowered to the closed position, the lower surface of the seat bottom 44 is pressed downward against the box seal 45 that is attached to the storage box 31, so that the box seal 45 is elastically deformed. This causes the box seal 45 to adhere tightly to the lower surface of the seat bottom 44, so that the clearance gap between the seat 17 and the storage box 31 is tightly sealed. When the seat 17 is raised from the closed position, the lower surface of the seat bottom 44 is separated from the box seal 45, so that the box seal 45 recovers its original shape.

The box seal 45 has an annular shape surrounding the opening 36 of the storage box 31 in a plan view. The box seal 45 may have a continuous annular shape across the entire circumference or have an annular shape with ends opposed to each other in the circumferential direction of the box seal 45. In the latter case, the spacing between the ends of the box seal 45 in the circumferential direction of the box seal 45 is as small as zero or a few millimeters, that is, the box seal 45 is substantially continuous across the entire circumference.

The box seal 45 surrounds the outer wall portion 39 of the storage box 31. As shown in FIG. 5, the storage box 31 includes an annular flange portion 40 extending outward from the outer peripheral surface of the outer wall portion 39 in the radial direction of the outer wall portion 39 and an annular protruding portion 41 extending upward from the flange portion 40. The box seal 45 is attached to the protruding portion 41. The protruding portion 41 surrounds the outer wall portion 39. The upper end of the protruding portion 41 is arranged at a position lower than that of the upper end 39a of the outer wall portion 39 that corresponds to the opening end of the storage box 31.

The box seal 45 includes an annular elastic body 46 to be in contact with the seat 17 and an annular core 47 embedded into the elastic body 46. The elastic body 46 is made of an elastic material such as rubber or resin. The core 47 is made of a material, such as metal, having stiffness higher than that of the elastic body 46. The core 47 has a U-shaped vertical cross-section opened downward. The elastic body 46 includes a plurality of protrusions arranged inside the core 47. The protruding portion 41 of the storage box 31 is arranged in the core 47 to be in contact with the plurality of protrusions. This causes the box seal 45 to be held on the storage box 31.

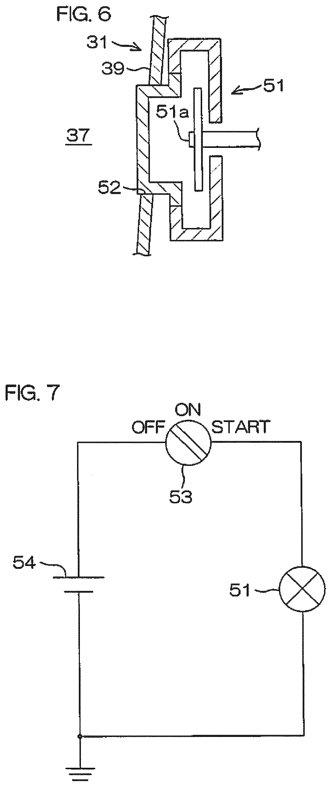

FIG. 6 is a partially enlarged view of FIG. 4, showing a vertical cross-section of an LED lamp 51 that illuminates the interior of the storage box 31. FIG. 7 is a schematic view showing an example of a circuit to connect the LED lamp 51 and a battery 54 with each other.

As shown in FIG. 6, the scooter 1 includes the LED lamp 51 configured to illuminate the interior (storage space 37) of the storage box 31. The LED lamp 51 is an example of a room lamp configured to illuminate the storage space 37 of the storage box 31. The LED lamp 51 may have a light source 51a (LED light source 51a) arranged in the storage box 31, that is, in the storage space 37 or outside the storage box 31. FIG. 6 shows the latter case. In this case, light from the LED lamp 51 is guided through a lighting hole 52 opened through the inner surface of the storage box 31 into the storage space 37. The LED lamp 51 is attached to the storage box 31.

The LED lamp 51 is turned on and off through an operation on a main switch 53 configured to be operated by the operator upon starting the scooter 1. FIG. 7 shows an example of a circuit to connect the LED lamp 51 and a battery 54 with each other. The LED lamp 51 is connected to the battery 54 via the main switch 53. The LED lamp 51 is one of the electrical devices included in the scooter 1.

The main switch 53 is configured to switch among a plurality of states including an ON state where power starts to be supplied from the battery 54 to the electrical devices, an OFF state where no power is supplied from the battery 54 to the electrical devices, and a START state where the starter motor starts the engine 14. The electrical devices continue to be supplied with power until the main switch 53, having turned into the ON state, turns into the OFF state. The LED lamp 51 continues to be on regardless of the position of the seat 17 until the main switch 53, having turned into the ON state, turns into the OFF state.

The LED lamp 51, which is configured to illuminate the storage space 37 of the storage box 31, thus continues to be on even in the state where the seat 17 is closed. There is thus no need to provide a switch configured to turn the LED lamp 51 on and off depending on the position of the seat 17. it is thus possible to reduce the number of parts of the scooter 1 and to reduce the weight of the scooter 1. In addition, although the LED lamp 51 continues to be on even in the state where the seat 17 is closed, there is no need to frequently replace the light source 51a of the LED lamp 51 because an LED has a longer life than that of a light bulb.

Next, the hinge 32 for linkage between the seat 17 and the frame 2 will be described.

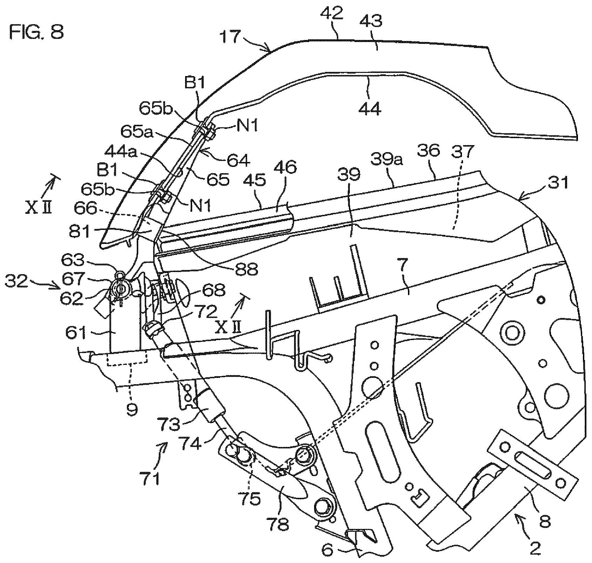

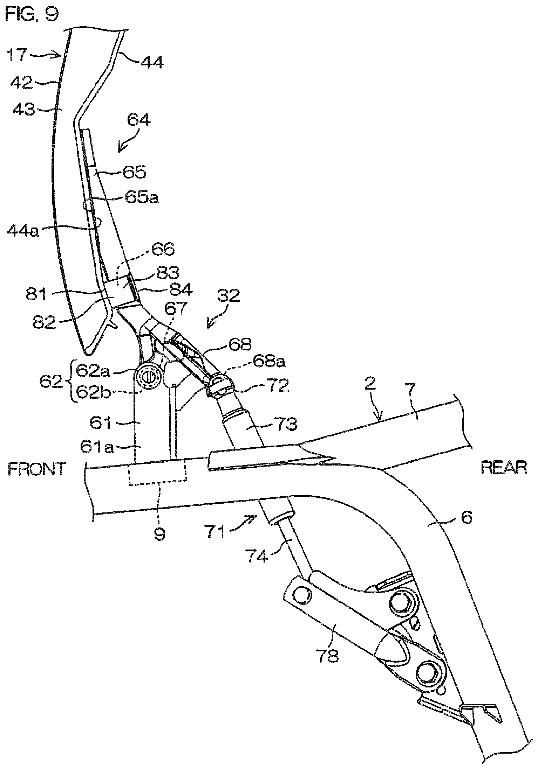

FIG. 8 is a left side view of the frame 2, the seat 17, the storage box 31, and the hinge 32. FIGS. 9, 10, and 11 are, respectively, a left side view, a front view, and a rear view of the frame 2, the hinge 32, and a gas spring 71. FIG. 8 shows a state where the seat 17 and a movable bracket 64 are arranged in the closed position. FIGS. 9 to 11 show a state where the movable bracket 64 is arranged in the open position.

As shown in FIG. 8, the hinge 32 includes a fixed bracket 61 fixed to the frame 2 and the movable bracket 64 attached to the seat 17 so as to be movable with respect to the frame 2. The hinge 32 further includes a linkage shaft 62 for rotatable linkage between the fixed bracket 61 and the movable bracket 64 and a stopper pin 63 configured to prevent the linkage shaft 62 from coming off from the fixed bracket 61 and the movable bracket 64. As can be seen from comparison between FIGS. 8 and 9, the movable bracket 64 is rotatable about the center line of the linkage shaft 62 with respect to the fixed bracket 61.

The movable bracket 64 is made of a material, such as metal, having stiffness higher than that of the seat bottom 44. The movable bracket 64 is a cast having undergone machining such as drilling. The movable bracket 64 includes a seat attaching portion 65 integrated with a shaft attaching portion 67, a seal attaching portion 66, and a spring attaching portion 68 to be described below. The material of the movable bracket 64 (movable bracket 64 before machining) is formed by die-casting, for example. An attaching surface 65a and an auxiliary sealing surface 87 of the movable bracket 64 to be described below are, for example, casting surfaces (surfaces of casts) not machined.
The manufacturing method for the material of the movable bracket 64 is not restricted to casting such as die-casting and may be another method such as press-working or forging.

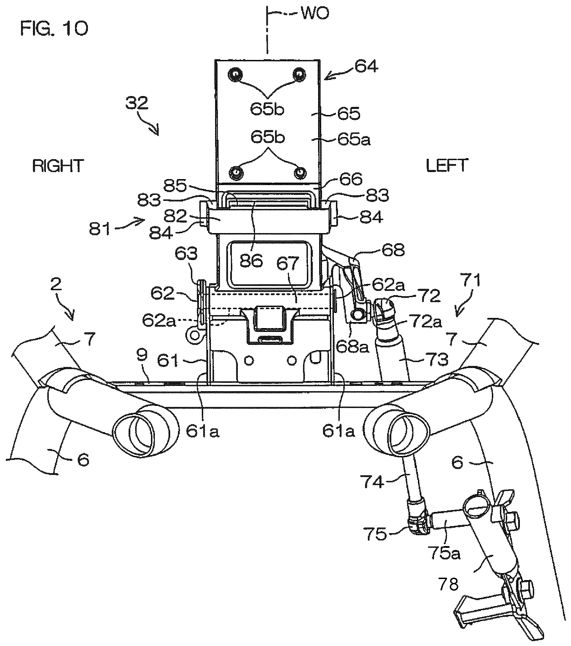

As shown in FIG. 10, the fixed bracket 61 includes a pair of left and right opposed plates 61a arranged on the right and left of the movable bracket 64. The opposed plates 61a extend upward from a front cross member 9. The opposed plates 61a are fixed to the front cross member 9. The pair of opposed plates 61a are arranged on the right and left of the vehicle center WO. As shown in FIG. 8, the opposed plates 61a are arranged in front of and separated forward from the storage box 31. The upper ends of the opposed plates 61a are arranged at a position lower than that of the upper end 39a of the outer wall portion 39 of the storage box 31.

As shown in FIG. 10, the movable bracket 64 includes the shaft attaching portion 67 that is linked to the fixed bracket 61 via the linkage shaft 62. The shaft attaching portion 67 is arranged between the pair of opposed plates 61a. The shaft attaching portion 67 has a cylindrical shape extending in the vehicle width direction. Through holes penetrating the opposed plates 61a in the vehicle width direction overlap, in a side view, a through hole penetrating the shaft attaching portion 67 in the vehicle width direction. The linkage shaft 62 is inserted into the through holes of the pair of opposed plates 61a and the through hole of the shaft attaching portion 67.

The linkage shaft 62 includes a disk-shaped stopper portion 62a orthogonal to the vehicle width direction and a shaft portion 62b extending from the stopper portion 62a in the vehicle width direction. The outside diameter of the stopper portion 62a is larger than the outside diameter of the shaft portion 62b and also larger than the diameter of the through holes of the opposed plates 61a. The shaft portion 62b is inserted into the through holes of the pair of opposed plates 61a and the through hole of the shaft attaching portion 67. A terminal portion of the shaft portion 62b extends outward from the opposed plates 61a in the vehicle width direction. The stopper pin 63 is attached to the terminal portion of the shaft portion 62b. The pair of opposed plates 61a are arranged between the stopper portion 62a and the stopper pin 63.

As shown in FIG. 8, the seat bottom 44 is fixed to the movable bracket 64 using a fixing bolt B1 and a fixing nut N1. The seat 17 includes a plurality of fixing bolts B1 protruding downward from the seat bottom 44. A head portion of each fixing bolt B1 is arranged between the seat bottom 44 and the cushion 43. A shaft portion of each fixing bolt B1 penetrates the seat bottom 44 in its thickness direction. The shaft portion of each fixing bolt B1 protrudes downward from a flat attaching surface 44a provided on the lower surface of the seat bottom 44. Each fixing bolt B1 is fixed to the seat bottom 44.

The movable bracket 64 includes the seat attaching portion 65 provided with a flat attaching surface 65a to be in contact with the lower surface of the seat bottom 44 and a plurality of bolt fitting holes 65b opened in the attaching surface 65a. The attaching surface 65a of the movable bracket 64 overlaps the attaching surface 44a of the seat bottom 44 and in surface contact with the attaching surface 44a of the seat bottom 44. The bolt fitting holes 65b penetrate the movable bracket 64 in the direction orthogonal to the attaching surface 65a of the movable bracket 64. The shaft portions of the fixing bolts B1 are inserted into the bolt fitting holes 65b to protrude downward from the movable bracket 64. The fixing nut N1 is attached to the shaft portion of each fixing bolt B1 below the movable bracket 64. The movable bracket 64 and the seat bottom 44 are sandwiched between the fixing bolts B1 and fixing nuts N1 in the axial direction of the fixing bolts B1.

As shown in FIG. 8, when the seat 17 is arranged in the closed position, the movable bracket 64 overlaps the opening 36 of the storage box 31 in a plan view. That is, upon this, the seat attaching portion 65 of the movable bracket 64 is arranged over the opening 36 of the storage box 31 to overlap the opening 36 of the storage box 31. Similarly, at least one of the plurality of pairs of fixing bolts B1 and fixing nuts N1 is arranged over the opening 36 of the storage box 31 to overlap the opening 36 of the storage box 31.

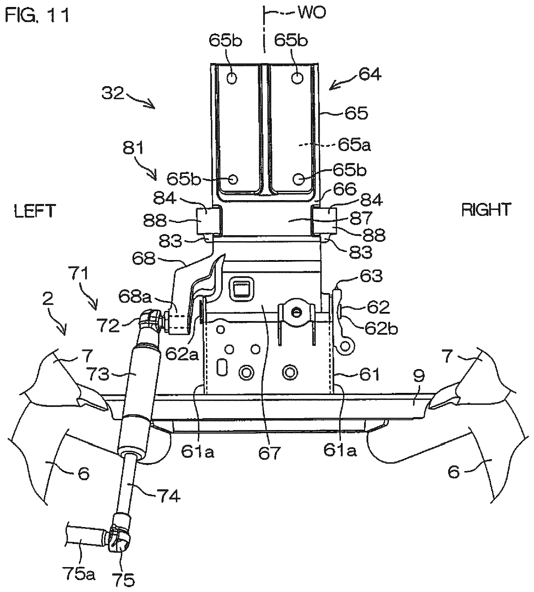

As shown in FIG. 11, the scooter 1 includes a gas spring 71 configured to generate a force for movement of the seat 17 to the open position. The gas spring 71 is arranged outside the storage box 31. The gas spring 71 includes a columnar tube 73 with gas enclosed therein, a piston partitioning the interior space of the tube 73 into two chambers separated in the axial direction of the tube 73, and a rod 74 protruding from an end face of the tube 73 in the axial direction of the tube 73 and configured to move together with the piston in the axial direction of the tube 73. The gas spring 71 further includes an upper joint 72 attached to one of the tube 73 and the rod 74 and a lower joint 75 attached to the other of the tube 73 and the rod 74.

The upper joint 72 is arranged at a position higher and further to the front than the lower joint 75 with the movable bracket 64 being located in any position. Both the upper joint 72 and the lower joint 75 are ball joints. The ball joints each include a shaft having a spherical terminal portion and a housing configured to house the terminal portion of the shaft. The housings of the upper joint 72 and the lower joint 75 are fixed, respectively, to the tube 73 and the rod 74. The shaft 72a of the upper joint 72 is fixed to the movable bracket 64. The shaft 75a of the lower joint 75 is fixed to the frame 2.

The movable bracket 64 includes a spring attaching portion 68 provided with a movable support portion 68a to which the shaft 72a of the upper joint 72 is fixed. As shown in FIGS. 9 and 10, the scooter 1 includes a stay 78 to which the shaft 75a of the lower joint 75 is fixed. The movable support portion 68a is arranged at a position higher and further to the front than the stay 78 with the movable bracket 64 being located in any position. The movable support portion 68a is further arranged inward of the stay 78 in the vehicle width direction. The movable support portion 68a is configured to move with respect to the stay 78 with the rotation of the seat 17, that is, with the expansion and contraction of the gas spring 71.

When the seat 17 moves toward the open position, the gas spring 71 axially expands while rotating with respect to the movable bracket 64 and the frame 2. On the contrary, when the seat 17 moves toward the closed position, the gas spring 71 axially contracts while rotating with respect to the movable bracket 64 and the frame 2. The gas spring 71 generates an expansion force for axial expansion, that is, a force for increasing the amount of protrusion of the rod 74 with respect to the tube 73. The operation of the operator for movement of the seat 17 toward the open position is assisted by the expansion force of the gas spring 71.

Next, a bracket seal 81 that seals the clearance gap between the seat 17 and the hinge 32 will be described.

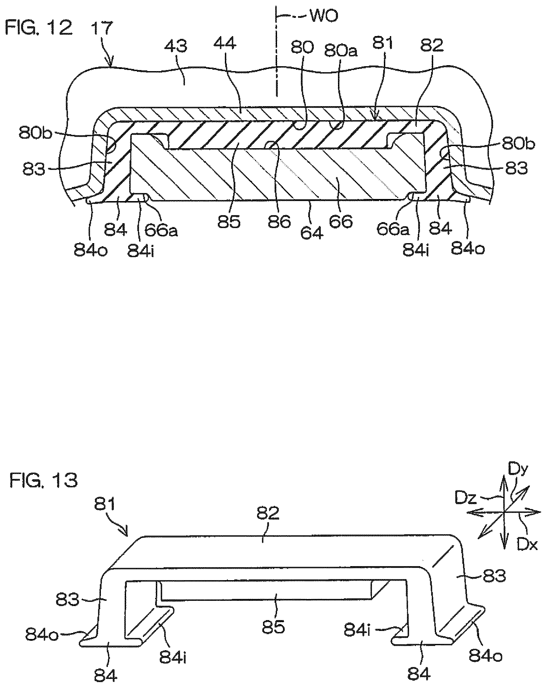

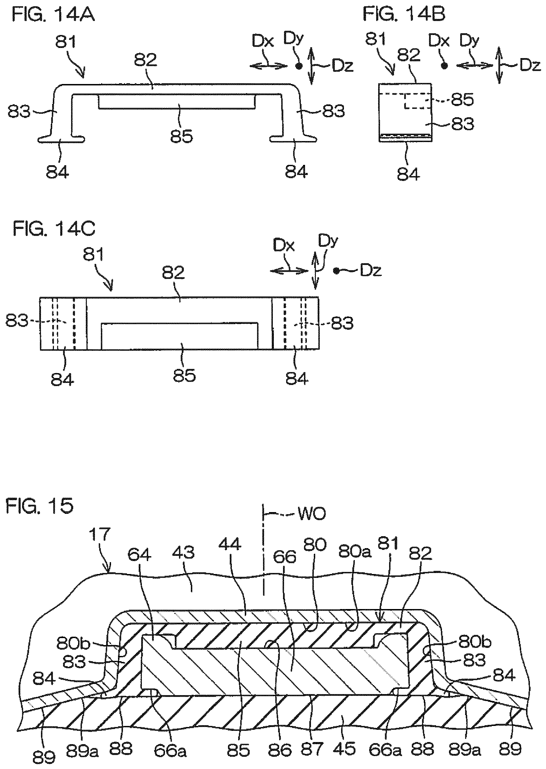

FIG. 12 is a cross-sectional view of the seat bottom 44, the movable bracket 64, and the bracket seal 81, taken along line XII-XII in FIG. 8. FIG. 13 is a schematic perspective view of the bracket seal 81. FIGS. 14A, 14B, and 14C are, respectively, a front view, a side view, and a bottom view of the bracket seal 81. FIG. 14A shows the front surface of the bracket seal 81, FIG. 14B shows the side of the bracket seal 81, and FIG. 14C shows the bottom of the bracket seal 81.

In the following description, the width direction Dx of the bracket seal 81 is the longitudinal direction of a bottom sealing portion 82 of the bracket seal 81, corresponding to the vehicle width direction. The height direction Dz of the bracket seal 81 is orthogonal to the bottom sealing portion 82. The depth direction Dy of the bracket seal 81 is orthogonal to both the width direction Dx and the height direction of the bracket seal 81. The front surface of the movable bracket 64 is opposed to the lower surface of the seat bottom 44, and the back surface of the movable bracket 64 is opposite to the front surface of the movable bracket 64.

As shown in FIG. 12, the scooter 1 includes the bracket seal 81 that seals the clearance gap between the seat 17 and the movable bracket 64. The bracket seal 81 is attached to the seal attaching portion 66 of the movable bracket 64. The bracket seal 81 is arranged between the seat 17 and the movable bracket 64. The movable bracket 64 is fitted into a fitting recessed portion 80 provided in the lower surface of the seat bottom 44. The fitting recessed portion 80 is recessed upward. The fitting recessed portion 80 includes a bottom surface 80a arranged over the movable bracket 64 and a pair of right and left side surfaces 80b arranged, respectively, on the right and left of the movable bracket 64. The attaching surface 44a of the seat bottom 44 to come into contact with the attaching surface 65a of the movable bracket 64 is provided in the bottom surface 80a of the fitting recessed portion 80.

The bracket seal 81 is an integral member made of an elastic material such as rubber or resin. The bracket seal 81 includes a bottom sealing portion 82 interposed between the bottom surface 80a of the fitting recessed portion 80 and the movable bracket 64 and a pair of side sealing portions 83 interposed between the pair of side surfaces 80b of the fitting recessed portion 80 and the movable bracket 64. The bracket seal 81 further includes a pair of terminal sealing portions 84 arranged outside the fitting recessed portion 80 and a positioning projecting portion 85 inserted into a positioning recessed portion 86 provided in the movable bracket 64.

As shown in FIGS. 13 and 14A to 14C, the bottom sealing portion 82 has a plate shape orthogonal to the height direction Dz of the bracket seal 81. The width of the bottom sealing portion 82 is larger than the depth of the bottom sealing portion 82. The pair of side sealing portions 83 extend in the height direction Dz of the bracket seal 81 from the ends of the bottom sealing portion 82 in the width direction Dx of the bracket seal 81 to the pair of terminal sealing portions 84. As is the case with the bottom sealing portion 82, the terminal sealing portions 84 each have a plate shape orthogonal to the height direction Dz of the bracket seal 81.

The pair of terminal sealing portions 84 are spaced and opposed to each other in the width direction Dx of the bracket seal 81. Similarly, the pair of side sealing portions 83 are spaced and opposed to each other in the width direction Dx of the bracket seal 81. Outer end portions 84o of the terminal sealing portions 84 in the width direction Dx of the bracket seal 81 extend outward from the side sealing portions 83 in the width direction Dx of the bracket seal 81. Inner end portions 84i of the terminal sealing portions 84 in the width direction Dx of the bracket seal 81 extend inward from the side sealing portions 83 in the width direction Dx of the bracket seal 81.

The positioning projecting portion 85 is arranged between the pair of side sealing portions 83. The positioning projecting portion 85 is shorter than the bottom sealing portion 82 in the width direction Dx of the bracket seal 81 and also shorter than the bottom sealing portion 82 in the depth direction Dy of the bracket seal 81. The positioning projecting portion 85 is shorter than the side sealing portions 83 in the height direction Dz of the bracket seal 81. The positioning projecting portion 85 is separated from the pair of side sealing portions 83 in the width direction Dx of the bracket seal 81. The positioning projecting portion 85 is biased in the depth direction Dy of the bracket seal 81 with respect to the bottom sealing portion 82.

Next, an example of a method to attach the seat 17 to the hinge 32 will be described.

Before the seat 17 is attached to the movable bracket 64, the bracket seal 81 is attached to the movable bracket 64 in advance. Specifically, as shown in FIG. 12, the bottom sealing portion 82 is arranged on a side of the front surface of the movable bracket 64, and the pair of side sealing portions 83 are arranged on the right and left of the movable bracket 64, respectively. Further, the positioning projecting portion 85 is inserted into the positioning recessed portion 86, and the pair of terminal sealing portions 84 are arranged on a side of the back surface of the movable bracket 64. Upon this, the inner end portions 84i of the terminal sealing portions 84 are fitted into housing recessed portions 66a provided in the back surface of the movable bracket 64. This causes the bracket seal 81 to be held on the movable bracket 64.

The positioning recessed portion 86 is recessed from the front surface of the movable bracket 64 toward the back surface of the movable bracket 64. The positioning projecting portion 85 and the positioning recessed portion 86 restrict the movement of the bracket seal 81 with respect to the movable bracket 64. Similarly, the pair of side sealing portions 83 and the movable bracket 64 restricts the movement of the bracket seal 81 with respect to the movable bracket 64. The terminal sealing portions 84 and the housing recessed portions 66a restricts the movement of the bracket seal 81 toward the front surface of the movable bracket 64 with respect to the movable bracket 64. This prevents the bracket seal 81 from coming off from the movable bracket 64.

Next, the seat 17 is attached to the movable bracket 64, to which the bracket seal 81 has been attached. Specifically, the attaching surface 44a of the seat bottom 44 is overlaid on the attaching surface 65a of the movable bracket 64 with the bracket seal 81 being attached to the movable bracket 64 (see FIG. 8). This causes the movable bracket 64 and the bracket seal 81 to be fitted into the fitting recessed portion 80 and thereby the shaft portions of the plurality of fixing bolts B1 to be inserted into the plurality of bolt fitting holes 65b of the movable bracket 64. Thereafter, the plurality of fixing nuts N1 are fitted to the plurality of fixing bolts B1. This causes the seat 17 to be fixed to the movable bracket 64.

FIG. 15 is a cross-sectional view showing a state where the seat bottom 44, the movable bracket 64, and the bracket seal 81 are pressed against the box seal 45. As shown in FIG. 15, the bottom sealing portion 82 is in contact with both the bottom surface 80a of the fitting recessed portion 80 and the front surface of the movable bracket 64. The side sealing portions 83 are in contact with both the side surfaces 80b of the fitting recessed portion 80 and the side of the movable bracket 64. This causes the clearance gap between the seat 17 and the movable bracket 64 to be tightly sealed. This reduces an amount of liquid to enter the storage space 37 of the storage box 31 through the clearance gap.

The terminal sealing portions 84 are arranged outside the clearance gap between the side surfaces 80b of the fitting recessed portion 80 and the side of the movable bracket 64 to overlap the entrance to the clearance gap. This reduces an amount of liquid to enter the clearance gap through the entrance to the clearance gap. The inner end portions 84i of the terminal sealing portions 84 are arranged inward of the entrance to the clearance gap in the vehicle width direction. The outer end portions 84o of the terminal sealing portions 84 are arranged outward of the entrance to the clearance gap in the vehicle width direction. The inner end portions 84i of the terminal sealing portions 84 overlap the movable bracket 64, while the outer end portions 84o of the terminal sealing portions 84 overlap the seat bottom 44.

When the seat 17 is arranged in the open position, the movable bracket 64 and the bracket seal 81 are separated from the box seal 45. As shown in FIG. 15, when the seat 17 is lowered to the closed position, the movable bracket 64 and the bracket seal 81 are pressed against the box seal 45. Similarly, the seat bottom 44 is pressed against the box seal 45. This causes the clearance gaps between the seat bottom 44, the movable bracket 64, and the bracket seal 81 and the box seal 45 to be tightly sealed.

As shown in FIG. 15, the lower surface of the seat bottom 44 includes a bottom sealing surface 89 to be pressed against the box seal 45 when the seat 17 is arranged in the closed position (see also FIG. 5). Similarly, the movable bracket 64 includes an auxiliary sealing surface 87 to be pressed against the box seal 45 when the seat 17 is arranged in the closed position. The bracket seal 81 includes a pair of terminal sealing surfaces 88 to be pressed against the box seal 45 when the seat 17 is arranged in the closed position. The terminal sealing surfaces 88 correspond to the lower surfaces of the terminal sealing portions 84.

The bottom sealing surface 89 of the seat 17 has an annular shape including a pair of terminal portions 89a separated from each other in the circumferential direction of the bottom sealing surface 89. The terminal portions 89a of the bottom sealing surface 89 correspond to front end portions of the bottom sealing surface 89. The fitting recessed portion 80 provided in the seat bottom 44 is arranged between the pair of terminal portions 89a of the bottom sealing surface 89. The fitting recessed portion 80 is recessed upward from the bottom sealing surface 89.

The auxiliary sealing surface 87 of the movable bracket 64 is arranged between the pair of housing recessed portions 66a that are provided in the back surface of the movable bracket 64. The housing recessed portions 66a are recessed from the auxiliary sealing surface 87. The auxiliary sealing surface 87 is arranged between the pair of terminal portions 89a of the bottom sealing surface 89. The terminal portions 89a of the bottom sealing surface 89 are separated from the auxiliary sealing surface 87 in the circumferential direction of the bottom sealing surface 89. The terminal sealing surfaces 88 of the bracket seal 81 are arranged between the bottom sealing surface 89 and the auxiliary sealing surface 87.

The bottom sealing surface 89 of the seat 17, the auxiliary sealing surface 87 of the movable bracket 64, and the pair of terminal sealing surfaces 88 of the bracket seal 81 are arranged in the circumferential direction of the bottom sealing surface 89. When the seat 17 is lowered to the closed position, the bottom sealing surface 89, the auxiliary sealing surface 87, and the terminal sealing surfaces 88 are pressed against the box seal 45. While the pair of terminal portions 89a of the bottom sealing surface 89 are separated from each other in the circumferential direction of the bottom sealing surface 89, the auxiliary sealing surface 87 and the terminal sealing surfaces 88 to be pressed against the box seal 45 are arranged between the pair of terminal portions 89a of the bottom sealing surface 89. This reduces an amount of liquid to enter the storage box 31 passing between the pair of terminal portions 89a of the bottom sealing surface 89.

As described above, in this preferred embodiment, the seat 17 is rotatable together with the movable bracket 64 with respect to the frame 2 between the closed position and the open position. When the seat 17 is arranged in the closed position, the clearance gap between the storage box 31 and the seat 17 is tightly sealed with the box seal 45, an example of the first sealing member, and the movable bracket 64 overlaps the opening 36 of the storage box 31 in a plan view. In other words, the storage box 31 is extended forward to achieve this. It is thus possible for the storage box 31 to have an increased capacity.

Further, since the movable bracket 64 is a member separated from the seat bottom 44, the shape of the seat bottom 44 can be simplified compared to the case where the movable bracket 64 is integrated with the seat bottom 44. In addition, the movable bracket 64 can be made of a material different from that of the seat bottom 44, and thus the stiffness of the movable bracket 64 can be increased. The clearance gap between the seat 17 and the movable bracket 64 is tightly sealed with the bracket seal 81, an example of the second sealing member. It is thus possible for the storage box 31 to have an increased capacity with its tight closure being maintained.

In this preferred embodiment, when the seat 17 is arranged in the closed position, the auxiliary sealing surface 87 of the movable bracket 64 is pressed against the box seal 45 attached to the storage box 31, so that the clearance gap between the movable bracket 64 and the storage box 31 is tightly sealed. That is, the movable bracket 64 serves not only as the hinge 32 but also to tightly seal the storage box 31. Accordingly, not only the clearance gap between the seat 17 and the storage box 31 but also the clearance gap between the movable bracket 64 and the storage box 31 is tightly sealed. It is thus possible for the storage box 31 to have an increased capacity with its tight closure being maintained.

In this preferred embodiment, when the seat 17 is arranged in the closed position, the bottom sealing surface 89 of the seat 17 is pressed against the box seal 45 attached to the storage box 31. While the box seal 45 has an annular shape surrounding the opening 36 of the storage box 31, the bottom sealing surface 89 of the seat 17 has a C shape including the pair of mutually separated terminal portions 89a. There is thus a non-contact region in which the bottom sealing surface 89 of the seat 17 is not in contact with the box seal 45. The auxiliary sealing surface 87 of the movable bracket 64 is arranged between the pair of terminal portions 89a of the bottom sealing surface 89 to come into contact with the box seal 45 in the non-contact region. It is thus possible to maintain the tight closure of the storage box 31.

In this preferred embodiment, the terminal portions 89a of the bottom sealing surface 89 of the seat 17 is separated from the auxiliary sealing surface 87 of the movable bracket 64 in the circumferential direction of the bottom sealing surface 89. The terminal sealing surfaces 88 provided in the terminal sealing portions 84 of the bracket seal 81 are arranged between the bottom sealing surface 89 of the seat 17 and the auxiliary sealing surface 87 of the movable bracket 64. When the seat 17 is arranged in the closed position, the bottom sealing surface 89 of the seat 17, the auxiliary sealing surface 87 of the movable bracket 64, and the terminal sealing surfaces 88 of the bracket seal 81 are pressed against the box seal 45. This allows the storage box 31 to have further increased tight closure.

In this preferred embodiment, the terminal sealing portions 84 of the bracket seal 81 overlaps both the seat 17 and the movable bracket 64. The entrance to the clearance gap between the seat 17 and the movable bracket 64 is blocked by the terminal sealing portions 84 of the bracket seal 81. Even if liquid such as rain water enters the clearance gap between the seat 17 and the movable bracket 64 from outside of the storage box 31, the liquid is blocked by the terminal sealing portions 84 of the bracket seal 81. This reduces an amount of liquid to enter the storage box 31.

In this preferred embodiment, the terminal sealing portions 84 of the bracket seal 81 are inserted into the housing recessed portions 66a of the movable bracket 64. The relative movement between the bracket seal 81 and the movable bracket 64 is restricted by the terminal sealing portions 84 and the housing recessed portions 66a. Further, since the housing recessed portions 66a of the movable bracket 64 are recessed from the auxiliary sealing surface 87 of the movable bracket 64, the height of the step between the auxiliary sealing surface 87 of the movable bracket 64 and the terminal sealing surfaces 88 of the bracket seal 81 can be reduced to zero or an extremely small value. This allows the interior of the storage box 31 to be tightly sealed more reliably.

In this preferred embodiment, the relative movement between the bracket seal 81 and the movable bracket 64 is restricted by the positioning projecting portion 85 and the positioning recessed portion 86. There is thus no need to hold the bracket seal 81 by hand when the seat 17 is attached to the movable bracket 64 to which the bracket seal 81 is attached.

In this preferred embodiment, the positioning recessed portion 86 is provided in the movable bracket 64 and the positioning projecting portion 85 is provided on the bracket seal 81. In this case, the movable bracket 64 can be reduced in size, compared to the case where the positioning projecting portion 85 is provided on the movable bracket 64. The movable bracket 64 commonly has a higher density than the bracket seal 81. Accordingly, reducing the size of the movable bracket 64 can result in a reduction in weight of the scooter 1.

In this preferred embodiment, the movable support portion 68a is provided in the movable bracket 64 so as to be movable with respect to the stay 78 with the expansion and contraction of the gas spring 71. The movable support portion 68a of the movable bracket 64 is integrated with the seat attaching portion 65 of the movable bracket 64. If the movable support portion 68a and the seat attaching portion 65 were separate members, there would be a need for a member and an operation for linkage between these members. It is thus possible to reduce the number of parts of the scooter 1 and to simplify the manufacturing of the scooter 1.

In this preferred embodiment, the fixed bracket 61 configured to rotatably support the movable bracket 64 is provided in the hinge 32. The fixed bracket 61 is a member separated from the storage box 31. It is thus possible to simplify the shape of the storage box 31.

In this preferred embodiment, when the main switch 53 turns into the ON state, the LED lamp 51 is turned on to illuminate the interior of the storage box 31. The LED lamp 51 continues to be on regardless of the position of the seat 17 until the main switch 53 turns into the OFF state. There is thus no need to provide a switch to turn the LED lamp 51 on and off depending on the position of the seat 17. It is thus possible to reduce the number of parts of the scooter 1 and to reduce the weight of the scooter 1. In addition, although the LED lamp 51 continues to be on even in the state where the seat 17 is closed, there is no need to frequently replace the light source 51a of the LED lamp 51 because an LED has a longer life than that of a light bulb.

### Other Preferred Embodiments

Although preferred embodiments have been described above, various modifications of the embodiments are possible.

For example, the hinge 32 may connect the right end portion or the left end portion of the seat 17 to the frame 2 instead of the front end portion of the seat 17. For example, if the right end portion of the seat 17 is connected to the frame 2 via the hinge 32, the left end portion of the seat 17 is locked by the seat lock device 33 with respect to the frame 2.

The box seal 45 may be attached not to the storage box 31 but to the seat 17.

When the seat 17 is arranged in the closed position, the movable bracket 64 may not be pressed against the box seal 45. That is, the auxiliary sealing surface 87 may be omitted from the movable bracket 64.

Similarly, when the seat 17 is arranged in the closed position, the bracket seal 81 may not be pressed against the box seal 45. That is, the terminal sealing surfaces 88 may be omitted from the bracket seal 81.

The housing recessed portions 66a, which are configured to house the terminal sealing portions 84 of the bracket seal 81, may be omitted from the movable bracket 64.

The terminal sealing portions 84 of the bracket seal 81 may overlap only one of the movable bracket 64 and the seat bottom 44 or may not overlap both the movable bracket 64 and the seat bottom 44. That is, at least one of the inner end portions 84i and the outer end portions 84o of the terminal sealing portions 84 may be omitted.

One or both of the pair of terminal sealing portions 84 may be omitted from the bracket seal 81.

The auxiliary sealing surface 87 of the movable bracket 64 may not be arranged between the pair of terminal portions 89a of the bottom sealing surface 89 of the seat 17. For example, the auxiliary sealing surface 87 may be deviated in the radial direction of the bottom sealing surface 89 with respect to the pair of terminal portions 89a of the bottom sealing surface 89.

The fixed bracket 61 may be fixed not to the frame 2 but to the storage box 31 or may be integrated with the storage box 31.

The positioning projecting portion 85 and the positioning recessed portion 86 may be provided, respectively, on the movable bracket 64 and in the bracket seal 81. Alternatively, the positioning projecting portion 85 and the positioning recessed portion 86 may be omitted from the movable bracket 64 and the bracket seal 81.

The movable support portion 68a, to which the gas spring 71 is attached, may be a member separated from the seat attaching portion 65 of the movable bracket 64. In this case, the movable support portion 68a may be linked to the movable bracket 64 or the seat bottom 44.

The gas spring 71 may be omitted from the scooter 1.

The light source of the room lamp that illuminates the interior of the storage box 31 is not limited to the LED light source 51a, but may be a light bulb.

The LED lamp 51 may not be constantly on after the main switch 53 is turned into the ON state. That is, a switch may be provided configured to turn the LED lamp 51 on and off depending on the position of the seat 17.

When the seat 17 is located at the closed position, the oil filler opening 18a of the fuel tank 18 may be disposed below the seat 17, or may be disposed behind the seat 17.

The straddled vehicle is not limited to a scooter type motorcycle in which the engine 14, which is an example of a power source, is swingable with respect to the frame 2, but may be an underbone type motorcycle in which the power source is fixed to the frame 2. Also the straddled vehicle is not limited to a motorcycle, but may be a vehicle including not less than 3 wheels, an all-terrain vehicle, or a snowmobile.

## Claims

1. A straddled vehicle (1) comprising:
a frame (2);
a storage box (31) including an annular opening end (39a) that defines an opening (36) opened upward;
a seat (17) arranged over the opening (36) of the storage box (31);
a hinge (32) including a movable bracket (64) that is a separate member from the seat (17), the movable bracket (64) being attached to the seat (17), the movable bracket (64) being rotatable together with the seat (17) with respect to the frame (2) between a closed position where the opening (36) of the storage box (31) is closed with the seat (17) and an open position where the opening (36) of the storage box (31) is opened, the movable bracket (64) being configured to overlap the opening (36) of the storage box (31) in a plan view of the straddled vehicle (1) when the seat (17) is arranged in the closed position;
an annular first sealing member (45) configured to be sandwiched between the seat (17) and the storage box (31) to seal a clearance gap between the seat (17) and the storage box (31) when the seat (17) is arranged in the closed position; **characterized by**
a second sealing member (81) sandwiched between the seat (17) and the movable bracket (64) to seal a clearance gap between the seat (17) and the movable bracket (64).

2. The straddled vehicle (1) according to Claim 1, wherein
the first sealing member (45) is attached to the storage box (31), and
the movable bracket (64) includes an auxiliary sealing surface (87) configured to be pressed against the first sealing member (45) when the seat (17) is arranged in the closed position.

3. The straddled vehicle (1) according to Claim 2, wherein
the seat (17) includes a bottom sealing surface (89) configured to be pressed against the first sealing member (45) when the seat (17) is arranged in the closed position, and
the bottom sealing surface (89) has an annular shape including a pair of terminal portions (89a) separated from each other in a circumferential direction of the bottom sealing surface (89), and
the auxiliary sealing surface (87) is arranged between the pair of terminal portions (89a) of the bottom sealing surface (89).

4. The straddled vehicle (1) according to Claim 3, wherein the second sealing member (81) includes a terminal sealing portion (84), the terminal sealing portion (84) having a terminal sealing surface (88) arranged between the terminal portions (89a) of the bottom sealing surface (89) and the auxiliary sealing surface (87), the terminal sealing portion (84) is configured to be pressed against the first sealing member (45) when the seat (17) is arranged in the closed position.

5. The straddled vehicle (1) according to Claim 4, wherein the terminal sealing portion (84) of the second sealing member (81) is arranged below the seat (17) and the movable bracket (64) and overlaps the seat (17) and the movable bracket (64).

6. The straddled vehicle (1) according to Claim 4 or 5, wherein the movable bracket (64) includes a housing recessed portion (66a) recessed from the auxiliary sealing surface (87), into which the terminal sealing portion (84) of the second sealing member (81) is inserted.

7. The straddled vehicle (1) according to any one of Claims 1 to 6, further comprising:
a positioning recessed portion (86) provided in one of the movable bracket (64) and the second sealing member (81); and
a positioning projecting portion (85) provided in the other of the movable bracket (64) and the second sealing member (81) and inserted into the positioning recessed portion (86).

8. The straddled vehicle (1) according to Claim 7, wherein the positioning recessed portion (86) is provided in the movable bracket (64).

9. The straddled vehicle (1) according to any one of Claims 1 to 8, further comprising:
a gas spring (71) that is arranged outside the storage box (31) and configured to generate a force to move the seat (17) to the open position; and
a stay (78) to which the gas spring (71) is attached, the stay (78) being fixed to the frame (2), wherein
the movable bracket (64) includes
a seat attaching portion (65) at which the seat (17) is attached and
a movable support portion (68a) integrated with the seat attaching portion (65), to which the gas spring (71) is attached, the movable support portion (68a) being configured to move with respect to the stay (78) with the expansion and contraction of the gas spring (71).

10. The straddled vehicle (1) according to any one of Claims 1 to 9, wherein the hinge (32) further includes a fixed bracket (61) separated from the storage box (31) and configured to rotatably support the movable bracket (64).

11. The straddled vehicle (1) according to any one of Claims 1 to 10, further comprising: an engine (14) configured to generate power to cause the straddled vehicle (1) to travel; and a fuel tank (18) configured to store fuel to be supplied to the engine (14), wherein
the fuel tank (18) includes an oil filler opening (18a) arranged at a position further to the front than the front end (17f) of the seat (17).

12. The straddled vehicle (1) according to any one of Claims 1 to 11, further comprising:
an electrical device (51);
a battery (54) configured to store power to be supplied to the electrical device (51); and
a main switch (53) configured to switch according to an operation by an operator among a plurality of states including an ON state in which power is supplied from the battery (54) to the electrical device (51) and an OFF state in which supply of power from the battery (54) to the electrical device (51) is stopped wherein
the electrical device (51) includes an LED lamp (51) configured to continuously illuminate an interior of the storage box (31) during a period of time from the time when the main switch (53) is turned into the ON state to the time when the main switch (53) is turned into the OFF state.

13. The straddled vehicle (1) according to any one of Claims 1 to 12, wherein the annular first sealing member (45) is made of rubber or resin and/or the second sealing member (81) is made of rubber or resin.

## Patentansprüche

1. Spreiz-Sitz-Fahrzeug (1) das umfasst:
einen Rahmen (2);
eine Lager-Box (31), die ein umlaufendes Öffnungs-Ende (39a) beinhaltet, welches eine Öffnung (36) definiert, die nach oben geöffnet ist;
einen Sitz (17), der über der Öffnung (36) der Lager-Box (31) angeordnet ist;
eine Aufhängung (32), die eine bewegbare Klammer (64) beinhaltet, die ein getrenntes Element von dem Sitz (17) ist, die bewegbare Klammer (64) ist an dem Sitz (17) angebracht, die bewegbare Klammer (64) ist drehbar zusammen mit dem Sitz (17) mit Bezug auf den Rahmen (2) zwischen einer verschlossenen Position, in welcher die Öffnung (36) der Lager-Box (31) mit dem Sitz (17) geschlossen ist, und einer offenen Position, in der die Öffnung (36) der Lager-Box (31) geöffnet ist, die bewegbare Klammer (64) ist konfiguriert um die Öffnung (36) der Lager-Box (31) in einer Draufsicht von dem Spreiz-Sitz-Fahrzeug (1) zu überlagern, wenn der Sitz (17) in der geschlossenen Position angeordnet ist;
ein umlaufendes erstes Dicht-Element (45), das konfiguriert ist um zwischen dem Sitz (17) und der Lager-Box (31) gesetzt zu sein, um einen freien Spalt zwischen dem Sitz (17) und der Lager-Box (31) abzudichten, wenn der Sitz (17) in der geschlossenen Position angeordnet ist, **gekennzeichnet durch**
ein zweites Dicht-Element (81), das zwischen dem Sitz (17) und der bewegbaren Klammer (64) gesetzt ist, um einen freien Spalt zwischen dem Sitz (17) und der bewegbaren Klammer (64) abzudichten.

2. Das Spreiz-Sitz-Fahrzeug (1) gemäß Anspruch 1, wobei
das erste Dicht-Element (45) an der Lager-Box(31) angebracht ist, und
die bewegbare Klammer (64) eine Zusatz-Dichtfläche (87) beinhaltet, die konfiguriert ist um gegen das erste Dicht-Element (45) gepresst zu werden, wenn der Sitz (17) in der geschlossenen Position angeordnet ist.

3. Das Spreiz-Sitz-Fahrzeug (1) gemäß Anspruch 2, wobei der Sitz eine Boden-Dichtfläche (89) beinhaltet, die konfiguriert ist um gegen die erste Dichtfläche (45) gepresst zu werden, wenn der Sitz (17) in der geschlossenen Position angeordnet ist, und
die Boden-Dichtfläche (89) hat eine umlaufende Form, die ein Paar von Anschluss-Abschnitten (89a) beinhaltet, die in einer Umfangsrichtung der Boden-Dichtfläche (89) getrennt voneinander sind, und
die Zusatz-Dichtfläche (87) ist zwischen dem Paar von Anschluss-Abschnitten (89a) von der Boden-Dichtfläche (89) angeordnet.

4. Das Spreiz-Sitz-Fahrzeug (1) gemäß Anspruch 3, wobei das zweite Dicht-Element (81) einen Anschluss-Dichtabschnitt (84) beinhaltet, der Anschluss-Dichtabschnitt (84) hat eine Anschluss-Dichtfläche (88), die zwischen den Anschluss-Abschnitten (89a) von der Boden-Dichtfläche (89) und der Zusatz-Dichtfläche (87) angeordnet ist, der Anschluss-Dichtabschnitt (84) ist konfiguriert um gegen das erste Dicht-Element (45) gepresst zu werden, wenn der Sitz (17) in der geschlossenen Position angeordnet ist.

5. Das Spreiz-Sitz-Fahrzeug (1) gemäß Anspruch 4, wobei der Anschluss-Dichtabschnitt (84) des zweiten Dicht-Elements (81) unterhalb des Sitz (17) und der bewegbaren Klammer (64) angeordnet ist, und den Sitz (17) und die bewegbare Klammer (64) überlappt.

6. Das Spreiz-Sitz-Fahrzeug (1) gemäß Anspruch 4 oder 5, wobei die bewegbare Klammer (64) einen gehäuse-ausgenommenen Abschnitt (66a) beinhaltet, der von der Zusatz-Dichtfläche (87) ausgenommen ist, in welchem der Anschluss-Dichtabschnitt (84) und das zweite Dicht-Element (81) eingesetzt sind.

7. Das Spreiz-Sitz-Fahrzeug (1) gemäß irgendeinem der Ansprüche 1 bis 6, das weiter umfasst:
einen positionierungs-ausgenommenen Abschnitt (86), der in einem von der bewegbaren Klammer (64) und der zweiten Dichtfläche (81) vorgesehen ist; und
einen positionierungs-vorspringenden Abschnitt (85), der in dem anderen von der bewegbaren Klammer (64) und dem zweiten Dicht-Element (81) vorgesehen ist, und
in den positionierungs-ausgenommenen Abschnitt (86) eingesetzt ist.

8. Das Spreiz-Sitz-Fahrzeug (1) gemäß Anspruch 7, wobei der positionierungsausgenommene Abschnitt (86) in der bewegbaren Klammer (64) vorgesehen ist.

9. Das Spreiz-Sitz-Fahrzeug (1) gemäß irgendeinem der Ansprüche 1 bis 8, das weiter umfasst:
eine Gas-Feder (71), die außerhalb der Lager-Box (31) angeordnet ist und konfiguriert ist, um eine Kraft zu erzeugen, um den Sitz (17) in die Offen-Position zu bewegen; und
eine Stütze (78), an welcher die Gas-Feder (71) angebracht ist, die Stütze (78) ist an dem Rahmen (2) fixiert, wobei
die bewegbare Klammer (64) beinhaltet
einen Sitz-Anbringungs-Abschnitt (65) an welchem der Sitz (17) angebracht ist, und
einen bewegbaren Lagerabschnitt (68a), der mit dem Sitz-Anbringungs-Abschnitt (65) integriert ist, an welchem die Gas-Feder (71) angebracht ist, der bewegbare Lagerabschnitt (68a) ist konfiguriert um sich mit Bezug auf die Stütze (78) mit der Expansion und Kontraktion der Gas Feder (71) zu bewegen.

10. Das Spreiz-Sitz-Fahrzeug (1) gemäß irgendeinem der Ansprüche 1 bis 9, wobei die Aufhängung (32) weiter eine fixierte Klammer (61) beinhaltet, die von der Lager-Box (31) getrennt und konfiguriert ist, um die bewegbare Klammer (64) drehbar zu lagern.

11. Das Spreiz-Sitz-Fahrzeug (1) gemäß irgendeinem der Ansprüche 1 bis 10, das weiter umfasst: einen Motor (14), der konfiguriert ist um Leistung zu erzeugen, um das Spreiz-Sitz-Fahrzeug (1) zu bewegen; und einen Kraftstoff-Tank (18), der konfiguriert ist um Kraftstoff zu lagern, der zu dem Motor (14) zuzuführen ist, wobei der Kraftstoff-Tank (18) eine Öl-Füll-Öffnung (18a) beinhaltet, die an einer Position weiter nach vorne als das Vorder-Ende (17f) von dem Sitz (17) angeordnet ist.

12. Das Spreiz-Sitz-Fahrzeug (1) gemäß irgendeinem der Ansprüche 1 bis 11, das weiter umfasst:
eine Elektro-Vorrichtung (51);
eine Batterie (54), die konfiguriert ist um Leistung die zu der Elektro-Vorrichtung (51) zuzuführen ist, zu speichern; und
einen Haupt-Schalter (53), der konfiguriert ist um gemäß einer Betätigung durch einen Bediener von einer Mehrzahl von Zuständen, die einen An-Zustand beinhalten, in welchem Leistung von der Batterie (54) zu der Elektro-Vorrichtung (51) zugeführt ist, und einen Aus-Zustand, in dem Zufuhr von Leistung von der Batterie (54) zu der Elektro-Vorrichtung (51) gestoppt ist, zu schalten, wobei
die Elektro-Vorrichtung (51) eine LED Lampe (51) beinhaltet, die konfiguriert ist um kontinuierlich einen Innenraum der Lager-Box (31) auszuleuchten, während einer Zeitperiode von der Zeit, wenn der Hauptschalter (53) in den An-Zustand gedreht ist, zu der Zeit, wenn der Haupt-Schalter (53) in den Aus-Zustand gedreht ist.

13. Das Spreiz-Sitz-Fahrzeug (1) gemäß irgendeinem der Ansprüche 1 bis 12, wobei das umlaufende erste Dicht-Element (45) aus Gummi oder Harz gemacht ist und/oder das zweite Dicht-Element (61) aus Gummi oder Harz gemacht ist.

## Revendications

1. Véhicule à selle (1) comprenant :
un cadre (2),
un coffre de stockage (31) incluant une extrémité d'ouverture annulaire (39a) qui définit une ouverture (36) ouverte vers le haut,
un siège (17) agencé au-dessus de l'ouverture (36) du coffre de stockage (31),
une charnière (32) incluant un support mobile (64) qui est un élément séparé du siège (17), le support mobile (64) étant fixé au siège (17), le support mobile (64) pouvant tourner en même temps que le siège (17) par rapport au cadre (2) entre une position fermée où l'ouverture (36) du coffre de stockage (31) est fermée avec le siège (17) et une position ouverte où l'ouverture (36) du coffre de stockage (31) est ouverte, le support mobile (64) étant configuré pour chevaucher l'ouverture (36) du coffre de stockage (31) dans une vue en plan du véhicule à selle (1) lorsque le siège (17) est agencé en position fermée,
un premier élément d'étanchéité (45) annulaire configuré pour être intercalé entre le siège (17) et le coffre de stockage (31) afin de rendre étanche un intervalle de jeu entre le siège (17) et le coffre de stockage (31) lorsque le siège (17) est agencé en position fermée, **caractérisé par**
un second élément d'étanchéité (81) intercalé entre le siège (17) et le support mobile (64) afin de rendre étanche un intervalle de jeu entre le siège (17) et le support mobile (64) .

2. Véhicule à selle (1) selon la revendication 1, dans lequel
le premier élément d'étanchéité (45) est fixé au coffre de stockage (31), et
le support mobile (64) inclut une surface d'étanchéité auxiliaire (87) configurée pour être pressée contre le premier élément d'étanchéité (45) lorsque le siège (17) est agencé en position fermée.

3. Véhicule à selle (1) selon la revendication 2, dans lequel
le siège (17) inclut une surface d'étanchéité de fond (89) configurée pour être pressée contre le premier élément d'étanchéité (45) lorsque le siège (17) est agencé en position fermée, et
la surface d'étanchéité de fond (89) présente une forme annulaire incluant une paire de parties terminales (89a) séparées l'une de l'autre dans la direction circonférentielle de la surface d'étanchéité de fond (89), et
la surface d'étanchéité auxiliaire (87) est disposée entre la paire de parties terminales (89a) de la surface d'étanchéité de fond (89).

4. Véhicule à selle (1) selon la revendication 3, dans lequel le second élément d'étanchéité (81) inclut un organe terminal d'étanchéité (84), l'organe terminal d'étanchéité (84) comportant une surface terminale d'étanchéité (88) agencée entre les parties terminales (89a) de la surface d'étanchéité de fond (89) et de la surface d'étanchéité auxiliaire (87), l'organe terminal d'étanchéité (84) étant configuré pour être pressé contre le premier élément d'étanchéité (45) lorsque le siège (17) est agencé en position fermée.

5. Véhicule à selle (1) selon la revendication 4, dans lequel l'organe terminal d'étanchéité (84) du second élément d'étanchéité (81) est agencé en dessous du siège (17) et du support mobile (64) et chevauche le siège (17) et le support mobile (64).

6. Véhicule à selle (1) selon la revendication 4 ou la revendication 5, dans lequel le support mobile (64) inclut un organe d'enveloppe en creux (66a) renfoncé à partir de la surface d'étanchéité auxiliaire (87) dans laquelle est inséré l'organe terminal d'étanchéité (84) du second élément d'étanchéité (81).

7. Véhicule à selle (1) selon l'une quelconque des revendications 1 à 6, comprenant en outre :
un organe de positionnement en creux (86) disposé dans l'un du support mobile (64) et du second élément d'étanchéité (81), et
un organe de positionnement en saillie (85) disposé dans l'autre du support mobile (64) et du second élément d'étanchéité (81), et inséré dans l'organe de positionnement en creux (86).

8. Véhicule à selle (1) selon la revendication 7, dans lequel l'organe de positionnement en creux (86) est disposé dans le support mobile (64).

9. Véhicule à selle (1) selon l'une quelconque des revendications 1 à 8, comprenant en outre :
un ressort à gaz (71) qui est agencé à l'extérieur du coffre de stockage (31) et configuré pour générer une force pour déplacer le siège (17) vers la position ouverte, et
un étai (78) auquel est fixé le ressort à gaz (71), l'étai (78) étant fixé au cadre (2), dans lequel
le support mobile (64) inclut :
un organe de fixation de siège (65) auquel est fixé le siège (17), et
un organe de support mobile (68a) intégré à l'organe de fixation de siège (65), auquel est fixé le ressort à gaz (71), l'organe de support mobile (68a) étant configuré pour se déplacer par rapport à l'étai (78) avec la dilatation et la contraction du ressort à gaz (71).

10. Véhicule à selle (1) selon l'une quelconque des revendications 1 à 9, dans lequel la charnière (32) inclut en outre un support fixe (61) séparé du coffre de stockage (31) et configuré pour supporter le support mobile (64) tout en pouvant tourner.

11. Véhicule à selle (1) selon l'une quelconque des revendications 1 à 10, comprenant en outre : un moteur thermique (14) configuré pour générer l'énergie autorisant le déplacement du véhicule à selle (1), ainsi qu'un réservoir de carburant (18) configuré pour stocker le carburant à fournir au moteur thermique (14), dans lequel
le réservoir de carburant (18) inclut une ouverture de filtre à huile (18a) agencée au niveau d'une position située plus en avant que l'extrémité avant (17f) du siège (17).

12. Véhicule à selle (1) selon l'une quelconque des revendications 1 à 11, comprenant en outre :
un dispositif électrique (51),
une batterie (54) configurée pour stocker l'énergie à fournir au dispositif électrique (51), et
un commutateur principal (53) configuré pour commuter, en fonction d'une manoeuvre effectuée par l'opérateur, entre une pluralité d'états incluant l'état MARCHE dans lequel l'énergie est fournie depuis la batterie (54) au dispositif électrique (51) et un état ARRÊT dans lequel la fourniture d'énergie de la batterie (54) au dispositif électrique (51) est stoppée, où
le dispositif électrique (51) inclut une lampe à diodes LED (51) configurée pour illuminer en continu l'intérieur du coffre de stockage (31) pendant un intervalle de temps allant du moment où le commutateur principal (53) est basculé à l'état MARCHE jusqu'au moment où le commutateur principal (53) est basculé à l'état ARRÊT.

13. Véhicule à selle (1) selon l'une quelconque des revendications 1 à 12, dans lequel le premier élément d'étanchéité (45) annulaire est constitué de caoutchouc ou de résine et/ou le second élément d'étanchéité (81) est constitué de caoutchouc ou de résine.
